# EUROPEAN PATENT APPLICATION

(11) **EP 4 800 916 A1**
(43) Date of publication of application: **02.09.2026**
(21) Application number: 25160883.2
(22) Date of filing: 28.02.2025
(51) Int. Cl.: H02P 21/28, H02P 21/12

(54) **METHODS OF OPERATING AN ELECTRICAL APPARATUS USING SPACE VECTOR CONTROL**

(71) Applicant: Thermo King LLC, Minneapolis, MN 55420 (US)
(72) Inventor: STAUDT, Volker, 44879 Bochum (DE); VOROBEV, Christian, 44797 Bochum (DE)
(74) Representative: Haseltine Lake Kempner LLP

(57) **Abstract**

The present disclosure relates to a method 300 of operating an electrical apparatus 200 comprising a rotary electric machine 230 and a power converter 220 electrically coupled to the rotary electric machine 230. The rotary electric machine 230 includes a rotor 234 and a stator 232. The method 300 comprises controlling the power converter 220 based on: determined components of a future stator magnetic flux space vector; an estimated future rotor electric current space vector and/or an estimated future magnetizing current space vector; and/or a combination of a change in a stored electrical energy of a DC link 210 to which the rotary electric machine 230 is coupled and a change in a stored electrical energy of the rotary electric machine 230.

## Description

### FIELD OF THE INVENTION

The present disclosure relates to a method of operating an electrical apparatus comprising a rotary electric machine (e.g., a motor) and a power converter (e.g., an inverter) electrically coupled to the rotary electric machine.

### BACKGROUND OF THE INVENTION

It is known to provide an electrical apparatus comprising a DC link, an inverter and an electric motor having a rotor which is coupled to a mechanical load. The electrical apparatus may generally be configured to drive the mechanical load. The mechanical load may be, for instance, a compressor or a fan associated with a refrigeration circuit of a transport refrigeration system. The DC link may be configured to receive power from an external power supply.

During operation of the electrical apparatus, a torque which is required to be produced by the electric motor for driving the mechanical load may change relatively quickly. Such changes in the torque which is required to be produced by the electric motor create challenges to the control regime for the electrical apparatus. For example, an electrical power drawn from the DC link by the electric motor may change significantly over a relatively short period of time. A voltage of the DC link may be subject to undesirable fluctuations as a result.

The present invention has been devised with the foregoing in mind.

### SUMMARY

According to a first aspect, there is provided a method of operating an electrical apparatus comprising a rotary electric machine and a power converter electrically coupled to the rotary electric machine, the rotary electric machine including a rotor and a stator, the method comprising:
determining components of a future stator magnetic flux space vector based on:
   a future rotor magnetic flux space vector,
   a magnitude of the future stator magnetic flux space vector, and
   a torque demand; and
controlling the power converter based on the determined components of the future stator magnetic flux space vector.

It may be that determining the components of the future stator magnetic flux space vector is based on an inductance (e.g., a leakage inductance) of the rotary electric machine.

It may be that determining the components of the future stator magnetic flux space vector is not directly based on a speed of the rotor.

The method may comprise: determining a break-down torque of the rotary electric machine; and limiting the torque demand based on the break-down torque.

The method may comprise limiting the torque demand based on the future rotor magnetic flux space vector and the magnitude of the future stator magnetic flux space vector.

The method may comprise limiting the torque demand based on a magnitude of a stator electric current space vector.

According to a second aspect there is provided a method of operating an electrical apparatus comprising a rotary electric machine and a power converter electrically coupled to the rotary electric machine, the rotary electric machine including a rotor and a stator, the method comprising:
estimating a future rotor electric current space vector and/or a future magnetizing electric current space vector by solving a system of differential equations; and
controlling the power converter based on the estimated future rotor electric current space vector and/or the estimated future magnetizing electric current space vector.

It may be that the system of differential equations includes a present stator voltage space vector. It may be that the system of differential equations includes a present rotor electric current space vector. It may be that the system of differential equations includes a present magnetizing electric current space vector. It may be that the system of differential equations includes at least one stator resistance term. It may be that the system of differential equations includes at least one rotor resistance term. It may be that the system of differential equations includes at least one magnetizing inductance term. It may be that the system of differential equations includes at least one inductance term (e.g., at least one leakage inductance term). It may be that the system of differential equations includes at least one rotor speed term.

It may be that the method comprises: determining the estimated future rotor electric current space vector and/or the estimated future magnetizing electric current space vector based on a present stator electric current space vector and a feedback factor. Determining the estimated future rotor electric current space vector and/or the estimated future magnetizing electric current space vector based on the present stator electric current space vector and the feedback factor may include: determining the present rotor electric current space vector and the present magnetizing electric current space vector based on the present stator electric current space vector and the feedback factor.

It may be that the feedback factor includes an inductance term. It may be that the feedback factor includes a leakage inductance term and/or a magnetizing inductance term.

It may be that the feedback factor corresponds to a quotient of the leakage inductance term by a sum of the magnetizing inductance term and the leakage inductance term.

According to a third aspect there is provided a method of operating an electrical apparatus comprising a DC link, a rotary electric machine and a power converter electrically coupled to the rotary electric machine and the DC link, the rotary electric machine including a rotor and a stator, the method comprising:
controlling the power converter based on a combination of a change in a stored electrical energy of the DC link and a change in a stored electrical energy of the rotary electrical machine.

It may be that the method comprises determining the change in the stored electrical energy of the DC link based on a capacitance of the DC link and a voltage of the DC link.

It may be that the method comprises: monitoring a voltage of the DC link; and determining the change in the stored electrical energy of the DC link based on a capacitance of the DC link and the monitored voltage of the DC link.

It may be that the method comprises determining the change in the stored electrical energy of the rotary electrical machine based on a rotor electric current space vector. It may be that the method comprises determining the change in the stored electrical energy of the rotary electrical machine based on the rotor electric current space vector and an inductance (e.g., a leakage inductance) of the rotary electrical machine.

It may be that the method comprises determining the change in the stored electrical energy of the rotary electrical machine based on a magnetizing electric current space vector. It may be that the method comprises determining the change in the stored electrical energy of the rotary electrical machine based on the magnetizing electric current space vector and a magnetizing inductance.

It may be that the method comprises controlling the power converter to target maintaining the combination of the change in the stored electrical energy of the DC link and the change in the stored electrical energy of the rotary electrical machine at a reference value.

Any feature of the first aspect may be combined with the second aspect and/or the third aspect. Any feature of the second aspect may be combined with the first aspect and/or the third aspect. Any feature of the third aspect may be combined with the first aspect and/or the second aspect.

According to a fourth aspect there is provided an electrical apparatus comprising:
a rotary electric machine including a rotor and a stator; a power converter electrically coupled to the rotary electric machine; and a controller configured to carry out a method in accordance with the first aspect, the second aspect and/or the third aspect.

According to a fifth aspect there is provided a computer program comprising instructions which, when executed by the controller of an electrical apparatus in accordance with the fourth aspect, cause the controller to carry out a method in accordance with the first aspect, the second aspect and/or the third aspect.

According to a sixth aspect machine-readable medium having stored thereon a computer program in accordance with the fifth aspect.

According to a seventh aspect there is provided a transport refrigeration system comprising an electrical apparatus in accordance with the fourth aspect.

According to an eighth aspect there is provided a vehicle comprising an electrical apparatus in accordance with the fourth aspect.

### BRIEF DESCRIPTION OF THE DRAWINGS

**FIG. 1** shows a vehicle comprising a transport refrigeration system;
**FIG. 2** is a schematic diagram of example transport refrigeration unit suitable for use with the vehicle of FIG. 1, the example transport refrigeration unit comprising a vapor-compression refrigeration circuit having a compressor;
**FIG. 3** is a schematic diagram of an example electrical apparatus suitable for use with the transport refrigeration unit of FIG. 2, the electrical apparatus comprising a power converter and an electric machine;
**FIG. 4** is a representative circuit diagram of the electric machine of FIG. 3;
**FIG. 5** shows an example method of operating the electrical apparatus of FIG. 3;
**FIG. 6** shows a part of the example method of FIG. 5 in detail;
**FIG. 7** shows a further part of the example method of FIG. 5 in detail;
**FIG. 8** shows a yet further part of the example method of FIG. 5 in detail; and
**FIG. 9** is a highly schematic diagram of a machine-readable medium having stored thereon a computer program.

### DETAILED DESCRIPTION

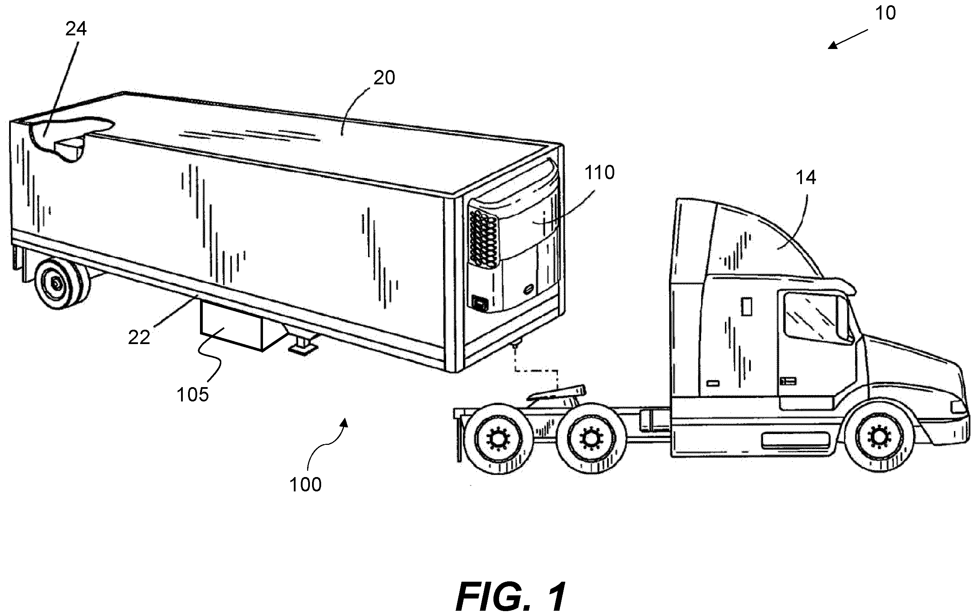

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a transport refrigeration unit (TRU) 110. The climate-controlled compartment 24 can take the form of multiple compartments or have multiple zones. The structure 22 includes a chassis. The vehicle 10 comprises an electrical apparatus 100 which includes various components disposed within an under-chassis box 105. In some examples, one or more components of the electrical apparatus 100 may be integrated or incorporated into the TRU 110. The structure 22 supports the TRU 110 and the under-chassis box 105. The vehicle 10 further comprises a tractor unit 14 removably couplable to the trailer.

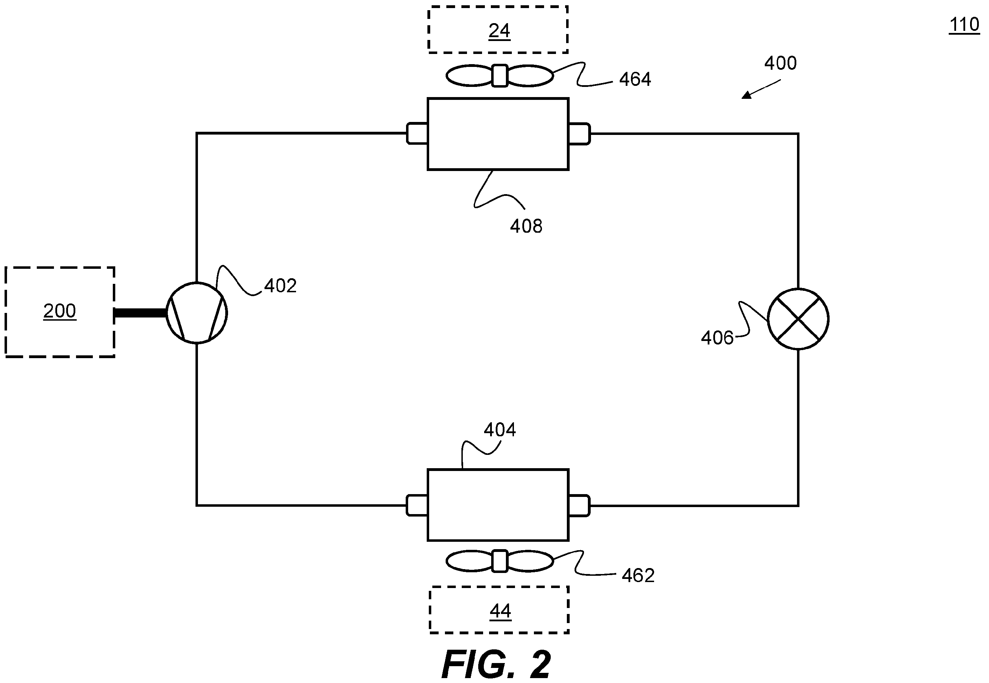

**FIG. 2** schematically shows a diagram of an example TRU 110 suitable for use within the vehicle 10 and the transport refrigeration system 20 of FIG. 1. The TRU 110 comprises a vapor-compression refrigeration circuit 400. The vapor-compression refrigeration circuit 400 includes an evaporator 408 which is configured to receive heat from the climate-controlled compartment 24 of the transport refrigeration system 20 and a condenser 404 which is configured to reject heat to a thermal sink 44 (e.g., ambient air outside of the climate-controlled compartment 24). For these purposes, the vapor-compression refrigeration circuit 400 also includes a compressor 402 and an expansion valve 406. Accordingly, the vapor-compression refrigeration circuit 400 may be controlled to cause heat to be removed from the climate-controlled compartment 24. The TRU 110 also comprises a plurality of fans 462, 464. In the example of FIG. 2, a first fan 462 is associated with (e.g. located in proximity to) the condenser 404 for improving heat transfer at one or more surfaces of the condenser 404, and a second fan 464 is associated with (e.g. located in proximity to) the evaporator 408 for improving heat transfer at one or more surfaces of the evaporator 408.

The compressor 402 is mechanically coupled to, and is therefore configured to be driven by, an electrical apparatus 200. The electrical apparatus 200 may be operated to drive the compressor 402 and thereby control the vapor-compression refrigeration circuit 400. The compressor 402 may be any suitable type of compressor, as will be apparent to those skilled in the art. However, in particular examples, the compressor 402 may be a reciprocating compressor (e.g., a piston compressor) or a scroll compressor.

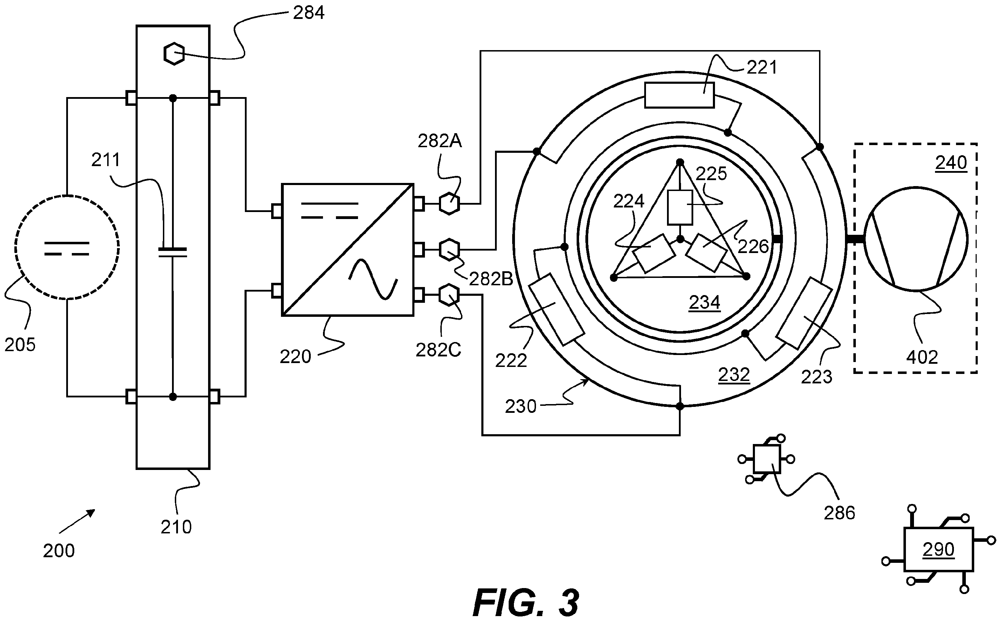

**FIG. 3** is a schematic diagram of an example electrical apparatus 200 which is particularly, but not exclusively, suitable for use with the vapor-compression refrigeration circuit 400 of FIG. 2 and the vehicle 10/transport refrigeration system 20 of FIG. 1. The example electrical apparatus 200 comprises a DC link 210, an inverter 220, an induction/asynchronous motor 230, a plurality of current sensors 282A-282C, a voltage sensor 284, a rotor speed sensor 286 and a controller 290. The induction/asynchronous motor 230 may be more generally referred to as an electric motor 230 or an electric machine 230 (e.g., a rotary electric machine 230) and the inverter 200 may be more generally referred to as a power converter 220. The DC link 210 includes a capacitor 211 for the purpose of stabilizing a voltage of the DC link 210.

The electric motor 230 includes a rotor 234, a stator 232 and a set of stator phase windings 221-223 and a set of rotor phase windings 224-226. Each of the set of stator phase windings 221-223 is associated with (e.g., disposed on or within) the stator 232 whereas each of the set of rotor phase windings 224-226 is associated with (e.g., disposed on or within) the rotor 234. In the example of FIG. 3, the set of stator phase windings comprises a first stator phase winding 221, a second stator phase winding 222 and a third stator phase winding 223. Correspondingly, the set of rotor phase windings comprises a first rotor phase winding 224, a second rotor phase winding 225 and a third rotor phase winding 226. Consequently, the electric motor 230 shown by FIG. 3 may be described as a three-phase AC electric motor 230. Each set of phase windings 221-223, 224-226 are shown as being connected in a star/wye configuration by FIG. 3. However, it will be appreciated that each set of phase windings 221-223, 224-226 may be otherwise connected, for example in a delta configuration. Each phase winding 221-226 may comprise one or more coils/turns.

The rotor 234 is mechanically coupled to a load 240 (e.g., a mechanical load 240) and is therefore configured to drive the load 240. The load 240 is directly or indirectly driven by rotation of the rotor 234. By way of example, the rotor 234 may be directly mechanically coupled to the load 240 via a driveshaft. By way of further example, the rotor 234 may be indirectly coupled to the load 240 via a transmission comprising a gearbox. In the example electrical apparatus 200 of FIG. 3, the load 240 is (e.g., includes) a compressor 402 (e.g., the compressor 402 of the vapor-compression refrigeration circuit 400 of FIG. 2). The rotor speed sensor 286 is configured to monitor an angular speed of the rotor 234 as it rotates and thus drives the load 240.

The inverter 220 is generally configured to receive an input DC voltage from the DC link 210 and to provide a plurality of output electrical currents (i.e., alternating currents, ACs) and corresponding voltages to the set of stator phase windings 221-223 (e.g., a respective output current and corresponding voltage to each of the set of stator phase windings 221-223). The input DC voltage corresponds to the voltage of the DC link 210. Accordingly, the electric motor 230 draws AC electrical power from the inverter 220 in use. The inverter 220 may comprise a plurality of switching devices, at least one inductive element and/or at least one capacitive element arranged in a suitable inverter topology, as will be known to those skilled in the art. The current sensors 282A-282C are each configured to monitor the output electrical current provided to a respective one of the stator phase windings 221-223 by the inverter 220. The voltage sensor 284 is configured to monitor the voltage of the DC link 210.

The DC link 210 is configured to receive a DC supply voltage from a DC power supply 205. The DC power supply 205 may be, or be derived from, an internal power supply (e.g., a fuel-cell pack, a battery or a rectifier coupled to a generator). If so, the DC power supply 205 may be disposed within the electrical apparatus 100 of the vehicle 10 shown by FIG. 1 (e.g., within the under-chassis box 105). Otherwise, the DC power supply 205 may be, or be derived from, an external power supply (e.g. a shore power supply) which is couplable to the electrical apparatus 100 via an external connection port and appropriate cabling. In particular, the DC power supply 205 may be a rectifier which is configured to receive an AC voltage received from the shore power supply. Such a rectifier may be referred to as a grid converter.

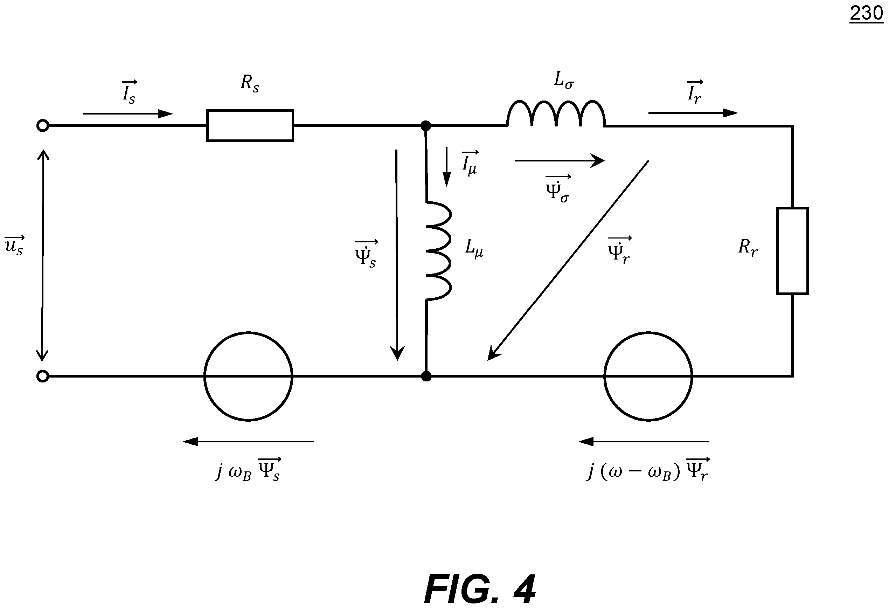

The controller 290 is generally configured to operate (e.g., automatically operate) the electrical apparatus 200. More specifically, the controller 290 is configured to operate the electrical apparatus 200 according to methods which are in accordance with the example method described below with reference to FIGs. 4 to 8. To this end, the controller 290 is communicatively coupled to the inverter 220, the plurality of current sensors 282A-282C, the voltage sensor 284 and the rotor speed sensor 286. More specifically, the controller 290 is configured to control the inverter 220 (e.g., by controlling a state of each of the switching devices of the inverter 220).

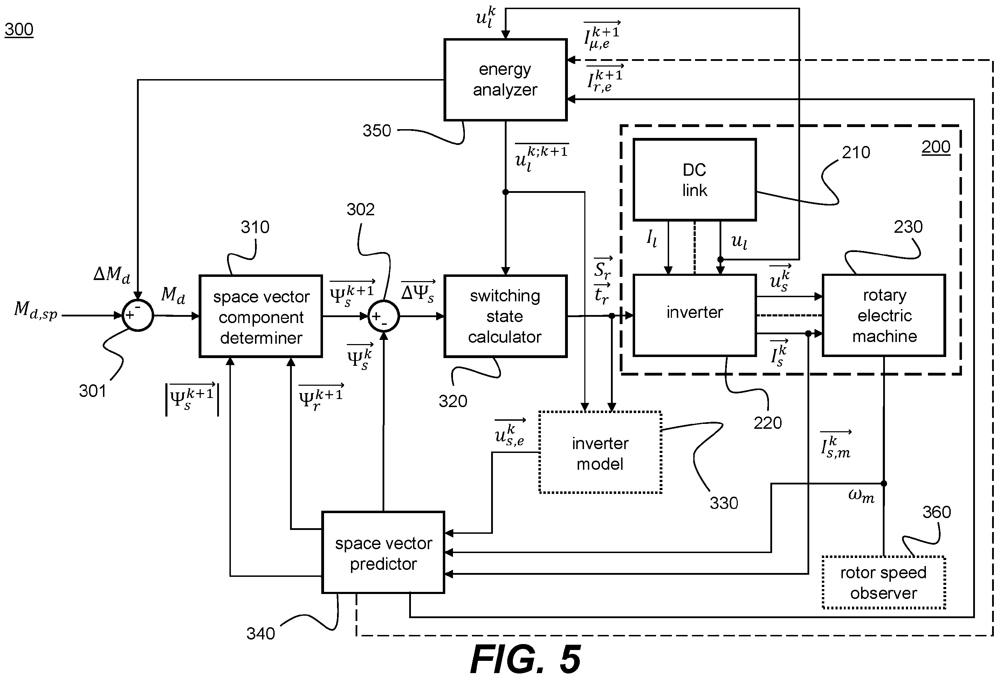

**FIG. 4** is a representative circuit diagram of the induction motor 230 of FIG. 3 in the form of a so-called canonical Γ-type equivalent circuit. Equations given herein (e.g., with references to FIGs. 5 to 8 below) relate to this Γ-type equivalent circuit of the induction motor 230 and use a stator-fixed reference frame (*ω_{B} =* 0). For the sake of completeness, it is noted that transformation(s) between other representative circuits (e.g., a T-type or an inverted Γ-type) will be familiar to those skilled in the art.

In FIG. 4: *̅u̅ₛ̅*̅ denotes a stator voltage space vector; Ψ̅*̅ₛ̅*̅ denotes a stator magnetic flux (e.g., flux linkage) space vector; Ψ̅*̅ᵣ̅*̅ denotes a rotor magnetic flux (e.g., flux linkage) space vector; Ψ̅_̅{̅σ̅}̅ denotes a leakage magnetic flux (e.g., flux linkage) space vector; *̅I̅ₛ̅*̅ denotes a stator electric current space vector; *̅I̅ᵣ̅*̅ denotes a rotor electric current space vector; *̅I̅_̅{̅µ̅}̅*̅ denotes a magnetizing electric current space vector; *Rₛ* denotes a stator resistance; *Rᵣ* denotes a rotor resistance; *L*_{σ} denotes a leakage inductance; *L_{µ}* denotes a magnetizing inductance; *ω* denotes an angular speed of the rotor 234 (e.g., the rotor speed); and *ωₛ* denotes an angular speed of the stator quantities; and *ω_{B}* denotes an angular speed of a selected reference frame (e.g., zero for stator-fixed reference frame or *ω* for rotor-fixed reference frame).

A "space vector", as referred to herein, relates to a vector resulting from a transformation referred to as "space vector transformation", "alpha-beta transformation" or "Clarke transformation", which will be familiar to those skilled in the art. A "space vector" relates to and describes quantities relating to the phase windings 221-226 of the motor 230. As an example, the stator voltage space vector *̅u̅ₛ̅*̅ contains a first stator voltage component relating to the first stator phase winding 221, a second stator voltage component relating to the second stator phase winding 222 and a third stator voltage component relating to the third stator phase winding 223. As another example, the rotor magnetic flux space vector Ψ̅*̅ᵣ̅*̅ contains a first rotor magnetic flux component relating to the first rotor phase winding 224, a second rotor magnetic flux component relating to the second rotor phase winding 225 and a third rotor magnetic flux component relating to the third rotor phase winding 226. As yet another example, the stator electric current space vector *̅I̅ₛ̅*̅ contains a first stator electric current component relating to the first stator phase winding 221, a second stator electric current component relating to the second stator phase winding 222 and a third stator electric current component relating to the third stator phase winding 223.

**FIG. 5** is a block diagram of an example method 300 of operating the electrical apparatus of FIG. 3. FIG. 5 shows, in schematic form, the DC link 210, the inverter 220 and the motor 230. In the following description provided with references to FIGs. 5 to 8, the term "present" is used to refer to the current (e.g., contemporaneous) control cycle within the method 300 whereas the term "future" is used to refer to the next (e.g., subsequently/following) control cycle. A superscript of *k* denotes quantities/parameters at the current control cycle and a superscript of *k* + 1 denotes quantities/parameters at the next control cycle.

In the method 300, a torque demand setpoint (e.g., a reference torque demand) *M_{d,sp}* is obtained. The torque demand setpoint *M_{d,sp}* may be obtained by being received from, for example, an external controller (e.g., a controller of the TRU 110). The torque demand setpoint *M_{d,sp}* corresponds to an amount of torque which the motor 230 is to produce, and may vary with time. A torque demand correction Δ*M_{d}* is subtracted from the a torque demand setpoint *M_{d,sp}* at step 301 to produce a torque demand *M_{d}*. The torque demand correction Δ*M_{d}* is discussed in further detail below.

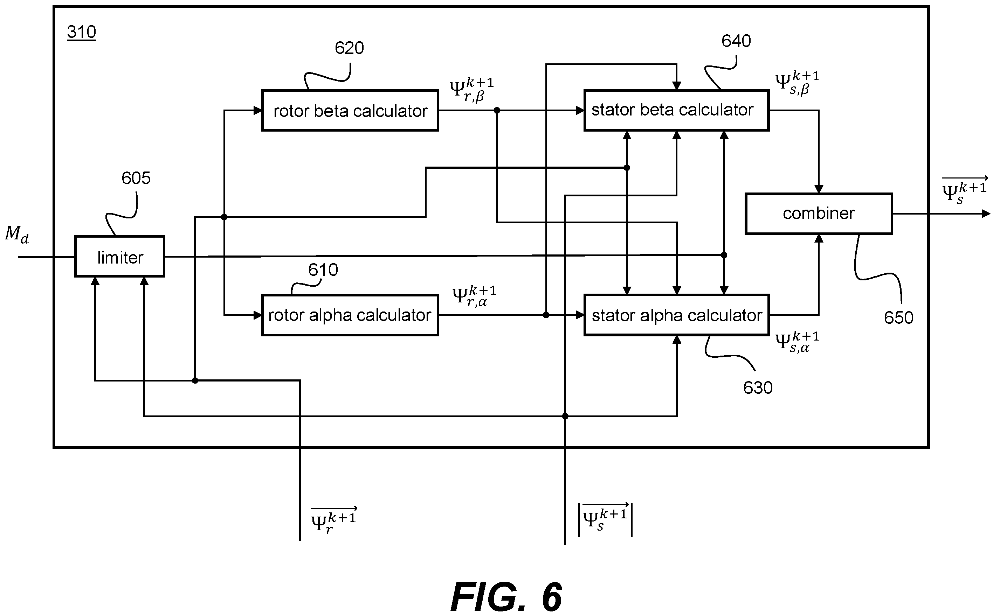

The torque demand *M_{d}* is provided as an input to a stator magnetic flux space vector component determiner 310. The stator magnetic flux space vector component determiner 310 also receives, as inputs, a future rotor magnetic flux space vector $\vec{{Ψ}_{r}^{k + 1}}$ and a magnitude of a future stator magnetic flux space vector $\left|\vec{{Ψ}_{r}^{k + 1}}\right|$. The stator magnetic flux space vector component determiner 310 determines the components of the future stator magnetic flux space vector $\vec{{Ψ}_{s}^{k + 1}}$ based on the torque demand *M_{d}*, the future rotor magnetic flux space vector $\vec{{Ψ}_{r}^{k + 1}}$ and the magnitude of the future stator magnetic flux space vector $\left|\vec{{Ψ}_{s}^{k + 1}}\right|$. **FIG. 6** is a block diagram which shows the stator magnetic flux space vector component determiner 310 shown by FIG. 5 in more detail.

The stator magnetic flux space vector component determiner 310 generally implements Equations (1) to (6) below. Specifically, the implements Equations (1) to (6) at the next control cycle (i.e., the "future"), and so FIGs. 5 and 6 show the relevant quantities with superscript k + 1. $\begin{matrix}{M}_{d} = \frac{3}{2 {L}_{σ}} \left|\vec{{Ψ}_{s}}\right| \left|\vec{{Ψ}_{r}}\right| sin \left(ϑ\right) \\ ⇒ {M}_{d} = - \frac{3}{2 {L}_{σ}} Im \left\{\vec{{Ψ}_{s}} \vec{{Ψ}_{r}}\right\}\end{matrix}$ ${Ψ}_{r , α} = Re \left\{\vec{{Ψ}_{r}}\right\}$ ${Ψ}_{r , β} = Im \left\{\vec{{Ψ}_{r}}\right\}$ ${Ψ}_{s , α} = Re \left\{\vec{{Ψ}_{s}}\right\} = {\left(3\left|\vec{{Ψ}_{r}}\right|\right)}^{- 1} \left[-2 {M}_{d} {L}_{σ} {Ψ}_{r , β}+{Ψ}_{r , α}\sqrt{9 {\left|\vec{{Ψ}_{s}}\right|}^{2} {\left|\vec{{Ψ}_{r}}\right|}^{2} - {\left(2 {M}_{d} {L}_{σ}\right)}^{2}}\right]$ ${Ψ}_{s , β} = Im \left\{\vec{{Ψ}_{s}}\right\} = {\left(3\left|\vec{{Ψ}_{r}}\right|\right)}^{- 1} \left[-2 {M}_{d} {L}_{σ} {Ψ}_{r , α}+{Ψ}_{r , β}\sqrt{9 {\left|\vec{{Ψ}_{s}}\right|}^{2} {\left|\vec{{Ψ}_{r}}\right|}^{2} - {\left(2 {M}_{d} {L}_{σ}\right)}^{2}}\right]$ $\vec{{Ψ}_{s}} = {Ψ}_{s , α} + j {Ψ}_{s , β}$

To this end, the stator magnetic flux space vector component determiner 310 includes a rotor alpha calculator 610, a rotor beta calculator 620, a stator alpha calculator 630, a stator beta calculator 640 and a combiner 650.

The rotor alpha calculator 610 determines an alpha component of the rotor flux Ψ_{r,α} based on the rotor magnetic flux space vector Ψ̅*̅ᵣ̅*̅ (i.e., the future rotor magnetic flux space vector $\vec{{Ψ}_{r}^{k + 1}}$) per Equation (2) above and the rotor beta calculator 620 determines a beta component of the rotor flux Ψ_{r,β} based on the rotor magnetic flux space vector Ψ̅*̅ᵣ̅*̅ (i.e., the future rotor magnetic flux space vector $\vec{{Ψ}_{r}^{k + 1}}$) per Equation (3) above.

The stator alpha calculator 630 then determines an alpha component of the stator flux Ψ_{s,α} based on the alpha component of the rotor flux Ψ_{r,α}, the beta component of the rotor flux Ψ_{r,β}, the rotor magnetic flux space vector Ψ̅*̅ᵣ̅*̅ (i.e., the future rotor magnetic flux space vector $\vec{{Ψ}_{r}^{k + 1}}$) the magnitude of the stator magnetic flux space vector |Ψ̅*̅ₛ̅*̅| (i.e., the magnitude of the future stator magnetic flux space vector $\left|\vec{{Ψ}_{s}^{k + 1}}\right|$), the torque demand *M_{d}* and the leakage inductance *L*_{σ} per Equation (4) above.

Similarly, the stator beta calculator 640 determines a beta component of the stator flux Ψ_{s,β} based on the alpha component of the rotor flux Ψ_{r,α}, the beta component of the rotor flux Ψ_{r,β}, the rotor magnetic flux space vector Ψ̅*̅ᵣ̅*̅ (i.e., the future rotor magnetic flux space vector $\vec{{Ψ}_{r}^{k + 1}}$), the magnitude of the stator magnetic flux space vector |Ψ̅*̅ₛ̅*̅| (i.e., the magnitude of the future stator magnetic flux space vector $\left|\vec{{Ψ}_{s}^{k + 1}}\right|$), the torque demand *M_{d}* and the leakage inductance *L*_{σ} per Equation (5) above.

The combiner 650 then combines the alpha component of the stator flux Ψ_{s,α} and the beta component of the stator flux Ψ_{s,β} in complex form to arrive at the components of the stator magnetic flux space vector Ψ̅*̅ₛ̅*̅ (i.e., the future rotor magnetic flux space vector $\vec{{Ψ}_{s}^{k + 1}}$) per Equation (6) above.

Accordingly, the method 300 includes determining the components of the future rotor magnetic flux space vector $\vec{{Ψ}_{s}^{k + 1}}$ based on the future rotor magnetic flux space vector $\vec{{Ψ}_{r}^{k + 1}}$, the magnitude of the future stator magnetic flux space vector $\left|\vec{{Ψ}_{s}^{k + 1}}\right|$, the torque demand *M*_{d} and the leakage inductance *L*_{σ}, in a single-shot process as carried out by the stator magnetic flux space vector component determiner 310. Advantageously, this single-shot process is not based (e.g., not directly based) on the rotor speed *ω*. This quantity is a key element of previously-considered processes and is known precisely only in non-transitory conditions of the motor 230. To address this, various approximations for dynamic conditions may be used in such previously-considered processes. The method 300 described herein avoids such approximations. Not being directly based on means that the relevant quantity (i.e., the rotor speed *ω*) is not immediately made use of during the relevant process.

In practice, limitations on the torque demand *M*_{d} may be observed to ensure accurate function of the stator magnetic flux space vector component determiner 310. To this end, the stator magnetic flux space vector component determiner 310 includes a limiter 605.

Without wishing to be bound by theory, it may be said that a technically relevant solution of Equations (4) and (5) above exists only if the square root term(s) returns a real (i.e., non-imaginary) value. In other words, the argument of these square root term(s) is positive. This is the case if the condition described by Equation (7) below is satisfied: $\begin{matrix}9 {\left|\vec{{Ψ}_{s}}\right|}^{2} {\left|\vec{{Ψ}_{r}}\right|}^{2} - {\left(2 {M}_{d} {L}_{σ}\right)}^{2} \geq 0 \\ ⇒ 3 \left|\vec{{Ψ}_{s}}\right| \left|\vec{{Ψ}_{r}}\right| \geq 2 \left|{M}_{d}\right| {L}_{σ} \\ ⇒ \left|{M}_{d}\right| \leq \frac{3}{2 {L}_{σ}} \left|\vec{{Ψ}_{s}}\right| \left|\vec{{Ψ}_{r}}\right|\end{matrix}$

To account for this, the torque demand *M*_{d} may be limited to the value given in Equation (7) by the limiter 605. The limiter 605 may also apply a safety factor (e.g., a discount) to the value specified by Equation (7) above to take into account a numerical precision of the apparatus carrying out the method 300 (e.g., the controller 290). It will be appreciated that, in the method 300, Equation (7) is evaluated by the limiter 605 based on the future rotor magnetic flux space vector $\vec{{Ψ}_{r}^{k + 1}}$ as the rotor magnetic flux space vector Ψ̅*̅ᵣ̅*̅, and the magnitude of the future stator magnetic flux space vector $\left|\vec{{Ψ}_{s}^{k + 1}}\right|$ as the magnitude of the stator magnetic flux space vector |Ψ̅*̅ₛ̅*̅|.

Further, under quasi-stationary conditions the torque demand *M*_{d} may be limited by the limiter 605 to no more than a break-down torque *Mₖ* per Equation (8) below. $\begin{matrix}{M}_{d} \leq \frac{3}{2 {L}_{σ}} \left|\vec{{Ψ}_{s}}\right| \left|\vec{{Ψ}_{r}}\right| sin \left(\frac{π}{4}\right) \\ ⇒ \leq \frac{3}{4 {L}_{σ}} \left|\vec{{Ψ}_{s}}\right| \left|\vec{{Ψ}_{r}}\right| {sin}^{2} \left(\frac{π}{2}\right) \\ {M}_{d} \leq {M}_{k} = \frac{3}{4 {L}_{σ}} {\left|\vec{{Ψ}_{s}}\right|}^{2}\end{matrix}$

If such a torque exceeding the break-down torque is commanded, the magnitude of the rotor magnetic flux space vector |Ψ̅*̅ᵣ̅*̅| will be reduced (e.g., as fast as a governing rotor time constant allows) and the torque demand *M*_{d} will be limited to the value given in Equation (8) by the limiter 605. Once the magnitude reaches a relative magnitude described by a factor of $\sqrt{2} / 2$, excess torque is no longer available. Such a reserve could be used to provide breakaway torque, if needed. Typically the time span for which breakaway torque is needed is shorter than the time span available for excess torque following from the above considerations.

A further limitation on the torque demand *M*_{d} implemented by the limiter 605 may be derived (e.g., result) from a maximum for the magnitude of the stator electric current space vector |*I̅ₛ̅*|,which may result from a sum of the magnetizing electric current space vector and rotor electric current space vector or a sum of the leakage magnetic flux space vector and the magnetizing electric current, weighted by the leakage inductance *L_{σ}* (not shown).

Returning now to FIG. 5, a present stator magnetic flux space vector $\vec{{Ψ}_{s}^{k}}$ is subtracted from the future stator magnetic flux space vector $\vec{{Ψ}_{s}^{k + 1}}$ at step 302 to produce a stator flux change space vector Δ̅Ψ̅*̅ₛ̅*̅. The stator flux change space vector Δ̅Ψ̅*̅ₛ̅*̅ is then provided as an input to a switching state calculator 320. The stator magnetic flux space vector component determiner 310 also receives, as an input, a voltage associated with the DC link 210. In the example of FIGs. 5 and 6, the voltage associated with the DC link 210 received by the switching state calculator 320 is an approximated available voltage of the DC link 210 $\overline{{u}_{l}^{k ; k + 1}}$ (described in further detail below). In other examples, the voltage of the DC link 210 may be a monitored voltage of the DC link 210 ${u}_{l}^{k}$ (e.g., an observed voltage of the DC link 210 as monitored by the voltage sensor 284).

Based on the stator flux change space vector Δ̅Ψ̅*̅ₛ̅*̅ and the voltage associated with the DC link 210, the switching state calculator 320 determines switching states *̅S̅ᵣ̅*̅ and switching timings *̅t̅ᵣ̅*̅ for the inverter 220. When determining the switching states *̅S̅ᵣ̅*̅ and the switching timings *̅t̅ᵣ̅*̅, the switching state calculator 320 may take into account (e.g., honor) any control or measurement limitations associated with the inverter 220, such as minimum zero state duration(s) imposed by the design of the driver circuits within the inverter 220. Suitable mathematical operations carried our by the switching state calculator 320 to this end will be known to those skilled in the art. By way of example, suitable mathematical operations are described in "Simple analytical and graphical methods for carrier-based PWM-VSI drives", M. Hava, R. J. Kerkman and T. A. Lipo, IEEE Trans. Power Electron, vol. 14, no. 1, pp. 49-61, January 1999.

The switching states *̅S̅ᵣ̅*̅ and the switching timings *̅t̅ᵣ̅*̅ determined by the switching state calculator 320 are provided as inputs to the inverter 220 for control of the plurality of switching devices therein. In this way, the operation of the inverter 200 is controlled.

In the example of FIG. 5, the switching states *̅S̅ᵣ̅*̅ and the switching timings *̅t̅ᵣ̅*̅ are also provided as inputs to an inverter model 330. The inverter model 330 also receives, as an inputs, the voltage associated with the DC link 210 (which is also received by the switching state calculator 320). Based on the switching states *̅S̅ᵣ̅*̅ and the switching timings *̅t̅ᵣ̅*̅ and the voltage associated with the DC link 210, the inverter model 330 determines an estimated present stator voltage space vector $\vec{{u}_{s , e}^{k}}$ which is then provided as an input to a space vector predictor 340. Suitable mathematical relationships included within the inverter model 330 for this purpose will be known to those skilled in the art. In some examples, the method 300 may not include the inverter model 330 and the space vector predictor 340 may receive, as an input, a monitored present stator voltage space vector (e.g., observed voltages on the phase windings of the stator 232) instead of the estimated present stator voltage space vector $\vec{{u}_{s , e}^{k}}$.

The space vector predictor 340 further receives, as inputs, a monitored or modelled rotor speed *ωₘ* (e.g., the speed of the rotor as monitored by the rotor speed sensor 286 or as modelled by a suitable model 360 (e.g., an observer) using techniques/principles that will be apparent to those skilled in the art or monitored) and a monitored present stator electric current space vector $\vec{{I}_{s , m}^{k}}$ (e.g., derived from the current through each of the phase windings of the stator 232 as monitored by the current sensors 282A-282C). If a modelled rotor speed *ωₘ* is used, the electrical apparatus 200 may not comprise a rotor speed sensor 286.

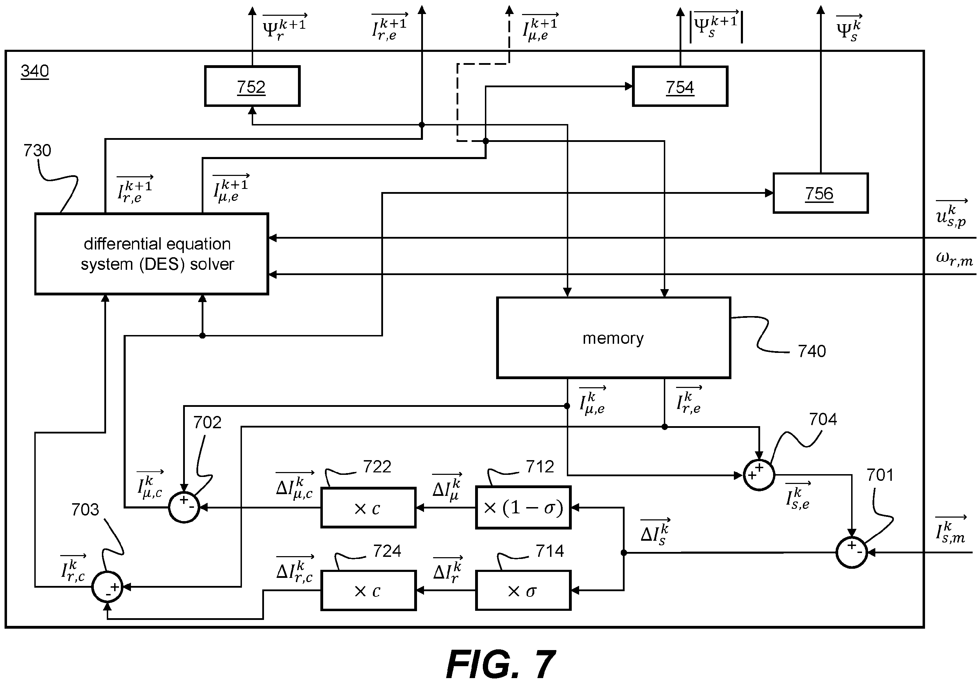

Based on the estimated present stator voltage space vector $\vec{{u}_{s , p}^{k}}$, the monitored or modelled rotor speed *ωₘ* and the monitored present stator electric current space vector $\vec{{I}_{s , m}^{k}}$, the space vector predictor 340 predicts (e.g., determines) an estimated future magnetizing electric current space vector $\vec{{I}_{μ , e}^{k + 1}}$, an estimated future rotor electric current space vector $\vec{{I}_{r , e}^{k + 1}}$, the magnitude of the future stator magnetic flux space vector $\vec{{Ψ}_{s}^{k + 1}}$, and the future rotor magnetic flux space vector $\vec{{Ψ}_{r}^{k + 1}}$. The space vector predictor 340 also determines the present stator magnetic flux space vector $\vec{{Ψ}_{s}^{k}}$. The magnitude of the future stator magnetic flux space vector $\vec{{Ψ}_{s}^{k + 1}}$ and the future rotor magnetic flux space vector $\vec{{Ψ}_{r}^{k + 1}}$ are provided as inputs to the stator magnetic flux space vector component determiner 310 as described above. FIG. 7 is a block diagram which shows the space vector predictor 340 shown by FIG. 5 in more detail.

The space vector predictor 340 includes a differential equation system (DES) solver 730 which is adapted to solve the system of differential equations set out in Equations (9) to (12) below, in which Equations (11) and (12) show Equations (9) and (10) in respective matrix forms. $\begin{matrix}{L}_{μ} \vec{{\dot{I}}_{μ}} = \vec{{u}_{s}} - {R}_{s} \left(\vec{{I}_{μ}}+\vec{{I}_{r}}\right) - {\dot{L}}_{μ} \vec{{I}_{μ}} \\ ⇒ \vec{{\dot{I}}_{μ}} = \frac{1}{{L}_{μ}} \left[\vec{{u}_{s}}-{R}_{s}\left(\vec{{I}_{μ}}+\vec{{I}_{r}}\right)-{\dot{L}}_{μ}\vec{{I}_{μ}}\right] \\ ⇒ \vec{{\dot{I}}_{μ}} = \frac{1}{{L}_{μ}} \left[\vec{{u}_{s}}+\vec{{I}_{μ}}\left(-{R}_{s}-{\dot{L}}_{μ}\right)+\vec{{I}_{r}}\left(-{R}_{s}\right)\right]\end{matrix}$ $\begin{matrix}{L}_{σ} \vec{{\dot{I}}_{r}} = \vec{{u}_{s}} + \vec{{I}_{μ}} \left(-{R}_{s}-{jωL}_{μ}\right) + \vec{{I}_{r}} \left({jωL}_{σ}-{\dot{L}}_{σ}-{R}_{r}-{R}_{s}\right) \\ ⇒ \vec{{\dot{I}}_{r}} = \frac{1}{{L}_{σ}} \left[\vec{{u}_{s}}+\vec{{I}_{μ}}\left(-{R}_{s}-{jωL}_{μ}\right)+\vec{{I}_{r}}\left({jωL}_{σ}-{\dot{L}}_{σ}-{R}_{r}-{R}_{s}\right)\right] \\ ⇒ \vec{{\dot{I}}_{r}} = \frac{1}{{L}_{σ}} \left[\vec{{I}_{μ}}\left(-{R}_{s}-{jωL}_{μ}\right)+\vec{{I}_{r}}\left({jωL}_{σ}-{\dot{L}}_{σ}-{R}_{r}-{R}_{s}\right)+\vec{{u}_{s}}\right]\end{matrix}$ $\left[\begin{matrix}\vec{{\dot{I}}_{μ}} \\ \vec{{\dot{I}}_{r}}\end{matrix}\right] = \left[\begin{matrix}- \frac{{R}_{s} - {\dot{L}}_{μ}}{{L}_{μ}} & - \frac{{R}_{s}}{{L}_{μ}} \\ \frac{- {R}_{s} - {jωL}_{μ}}{{L}_{σ}} & \frac{{jωL}_{σ} - {\dot{L}}_{σ} - {R}_{r} - {R}_{s}}{{L}_{σ}}\end{matrix}\right] \left[\begin{matrix}\vec{{I}_{μ}} \\ \vec{{I}_{r}}\end{matrix}\right] + \left[\begin{matrix}\frac{1}{{L}_{μ}} \\ \frac{1}{{L}_{σ}}\end{matrix}\right] \vec{{u}_{s}}$ $\left[\begin{matrix}\vec{{I}_{μ , e}^{k + 1}} - \vec{{I}_{μ}^{k}} \\ \vec{{I}_{r , e}^{k + 1}} - \vec{{I}_{r}^{k}}\end{matrix}\right] \frac{1}{Δ t} = \left[\begin{matrix}- \frac{{R}_{s} - {\dot{L}}_{μ}}{{L}_{μ}} & - \frac{{R}_{s}}{{L}_{μ}} \\ \frac{- {R}_{s} - {jωL}_{μ}}{{L}_{σ}} & \frac{{jωL}_{σ} - {\dot{L}}_{σ} - {R}_{r} - {R}_{s}}{{L}_{σ}}\end{matrix}\right] \left[\begin{matrix}\vec{{I}_{μ}^{k}} \\ \vec{{I}_{r}^{k}}\end{matrix}\right] + \left[\begin{matrix}\frac{1}{{L}_{μ}} \\ \frac{1}{{L}_{σ}}\end{matrix}\right] \vec{{u}_{s , p}^{k}}$

Namely, Equation (12) is a discretized matrix form of the system of differential equations which the DES solver 730 is adapted to solve as shown by FIG. 7, and in which Δ*t* is the time step between control cycles (e.g., between the current control cycle k and the next control cycle *k* + 1). The inertia of system (e.g., the motor 230) may be considered to allow for the rotor speed *ω* to be treated as constant between control cycles. In this way, the system of differential equations represented by Equation (12) is linearized.

As will be appreciated by those skilled in the art, the DES solver 730 may make use of a Runge-Kutta method or a Z-transform based method to solve Equation (12) for the future magnetizing electric current space vector $\vec{{I}_{μ , e}^{k + 1}}$ and the future rotor electric current space vector $\vec{{I}_{r , e}^{k + 1}}$. Consequently, in use, the space vector predictor 340 estimates (e.g., predictively estimates) the future rotor electric current space vector $\vec{{I}_{r , e}^{k + 1}}$ and the future magnetizing electric current space vector $\vec{{I}_{μ , e}^{k + 1}}$ by solving the system differential equations represented by Equations (9) to (12). Accordingly, the future rotor electric current space vector $\vec{{I}_{r , e}^{k + 1}}$ and the future magnetizing electric current space vector $\vec{{I}_{μ , e}^{k + 1}}$ are referred to as being "estimated" herein.

Specifically, and to this end, the DES solver 730 receives a present rotor electric current space vector $\vec{{I}_{r}^{k}}$, a present magnetizing electric current space vector $\vec{{I}_{μ}^{k}}$, the present stator voltage space vector $\vec{{u}_{s , p}^{k}}$ and the monitored or modelled rotor speed *ωₘ* (as the rotor speed *ω*). In the example of FIG. 7, the present magnetizing electric current space vector $\vec{{I}_{μ}^{k}}$ is an adjusted present magnetizing electric current space vector $\vec{{I}_{μ , c}^{k}}$ and the present rotor electric current space vector $\vec{{I}_{r}^{k}}$ is an adjusted present rotor electric current space vector $\vec{{I}_{r , c}^{k}}$ as described in further detail below.

For the avoidance of doubt, the system of differential equations represented in discretized form by Equation (14) includes: the present rotor electric current space vector $\vec{{I}_{r}^{k}}$, the present magnetizing electric current space vector $\vec{{I}_{μ}^{k}}$, and the present stator voltage space vector $\vec{{u}_{s , p}^{k}}$. The system of differential equations also includes a rotor speed term *ω* (i.e., the monitored or modelled rotor speed *ωₘ*), at least one stator resistance term *Rₛ,* at least one rotor resistance term *Rᵣ*, at least one magnetizing inductance term *L_{µ}* and at least leakage inductance term *L_{σ}.*

The estimated future magnetizing electric current space vector $\vec{{I}_{μ , e}^{k + 1}}$ and the estimated future rotor electric current space vector $\vec{{I}_{r , e}^{k + 1}}$ are then provided as respective inputs to a first converter 752 and a second converter 754. Within the first converter 752, the estimated future rotor electric current space vector $\vec{{I}_{r , e}^{k + 1}}$ is converted into the future rotor magnetic flux space vector $\vec{{Ψ}_{r}^{k + 1}}$ (e.g., based on the leakage inductance *L*_{σ}) whereas within the second converter 754, the estimated future magnetizing electric current space vector $\vec{{I}_{μ , e}^{k + 1}}$ is converted into the magnitude of the future stator magnetic flux space vector $\left|\vec{{Ψ}_{s}^{k + 1}}\right|$ (e.g., based on the magnetizing inductance *L_{µ}*).

The estimated future magnetizing electric current space vector $\vec{{I}_{μ , e}^{k + 1}}$ and the estimated future rotor electric current space vector $\vec{{I}_{r , e}^{k + 1}}$ are also stored in a memory 740 for use in the next control cycle, in which they will be used as an estimated present magnetizing electric current space vector $\vec{{I}_{μ , e}^{k}}$ and an estimated present rotor electric current space vector $\vec{{I}_{r , e}^{k}}$ respectively. Namely, and as shown by FIG. 7, the estimated present magnetizing electric current space vector $\vec{{I}_{μ , e}^{k}}$ and the estimated present rotor electric current space vector $\vec{{I}_{r , e}^{k}}$ are summed together at step 704 to yield an estimated present stator electric current space vector $\vec{{I}_{s , e}^{k}}$. The memory 740 may also contain predetermined values for the estimated present magnetizing electric current space vector $\vec{{I}_{μ , e}^{k}}$ and the estimated present rotor electric current space vector $\vec{{I}_{r , e}^{k}}$ to be used on initialization of the method 300 (e.g., before the estimated future magnetizing electric current space vector $\vec{{I}_{μ , e}^{k + 1}}$ and the estimated future rotor electric current space vector $\vec{{I}_{r , e}^{k + 1}}$ have yet been stored in the memory 740 as described above).

In the example of FIG. 7, the monitored present stator electric current space vector $\vec{{I}_{s , m}^{k}}$ is subtracted from the estimated present stator electric current space vector $\vec{{I}_{s , e}^{k}}$ at step 701 to yield a present current deviation space vector $\vec{Δ {I}_{s}^{k}}$. The present current deviation space vector $\vec{Δ {I}_{s}^{k}}$ is then provided as an input to both of a first multiplier 712 and a second multiplier 714.

Within the first multiplier 712, the present current deviation space vector $\vec{Δ {I}_{s}^{k}}$ is multiplied by a factor of (1 - *σ*) to give a present magnetizing electric current deviation space vector $\vec{Δ {I}_{μ}^{k}}$. Conversely, within the second multiplier 714, the present current deviation space vector $\vec{Δ {I}_{s}^{k}}$ is multiplied by a factor of *σ* to give a present rotor electric current deviation space vector $\vec{Δ {I}_{r}^{k}}$. Equations (13) and (14) below show how the factors applied in the first and second multipliers may be arrived at, where *σ* is a feedback factor equal to a quotient of the leakage inductance *L*_{σ} by a sum of the magnetizing inductance *L_{µ}* and the leakage inductance *L*_{σ} per Equation (14). $\frac{\frac{1}{{L}_{σ}}}{\frac{1}{{L}_{σ}} + \frac{1}{{L}_{μ}}} = \frac{{L}_{μ}}{{L}_{μ} + {L}_{σ}} = \left(1-σ\right)$ $\frac{\frac{1}{{L}_{μ}}}{\frac{1}{{L}_{σ}} + \frac{1}{{L}_{μ}}} = \frac{{L}_{σ}}{{L}_{μ} + {L}_{σ}} = σ$

The present magnetizing electric current deviation space vector $\vec{Δ {I}_{μ}^{k}}$ and the present rotor electric current deviation space vector $\vec{Δ {I}_{r}^{k}}$ are then provided as respective inputs to a third multiplier 716 and a fourth multiplier 718 as shown by FIG. 7. The present magnetizing electric current deviation space vector $\vec{Δ {I}_{μ}^{k}}$ is multiplied by a constant c within the third multiplier 716 to produce a corrected present magnetizing electric current deviation space vector $\vec{Δ {I}_{μ , c}^{k}}$ and the present rotor electric current deviation space vector $\vec{Δ {I}_{r}^{k}}$ is multiplied by the constant c within the fourth multiplier 718 to produce a corrected present rotor electric current deviation space vector $\vec{Δ {I}_{r , c}^{k}}$. The constant c is adjustable so that a user can vary the impact which the monitored present stator electric current space vector $\vec{{I}_{s , m}^{k}}$ has on the present electric current space vectors which are received by the DES solver 730 for optimization purposes pre-installation or post-installation.

The corrected present magnetizing electric current deviation space vector $\vec{Δ {I}_{μ , c}^{k}}$ is subtracted from the estimated present magnetizing electric current space vector $\vec{{I}_{μ , e}^{k}}$ at step 702 to give the adjusted present magnetizing electric current space vector $\vec{{I}_{μ , c}^{k}}$*.* In a similar way, the corrected present rotor electric current deviation space vector $\vec{Δ {I}_{r , c}^{k}}$ is subtracted from the estimated present rotor electric current space vector $\vec{{I}_{r , e}^{k}}$ at step 703 to give the adjusted present rotor electric current space vector $\vec{{I}_{r , c}^{k}}$. In the example of FIG. 7, in addition to being provided to the DES solver 730 as an input, the adjusted present magnetizing electric current space vector $\vec{{I}_{μ , c}^{k}}$ is provided to a third converter 756 as an input. Within the third converter 756, the adjusted present magnetizing electric current space vector $\vec{{I}_{μ , c}^{k}}$ is converted into the present stator magnetic flux space vector $\vec{{Ψ}_{s}^{k}}$ (e.g., based on the magnetizing inductance *L_{µ}*).

By solving the system of differential equations for the future magnetizing electric current space vector $\vec{{I}_{μ , e}^{k + 1}}$ and the future rotor electric current space vector $\vec{{I}_{r , e}^{k + 1}}$ using the DES solver 730 (e.g., rather than solving a different system of differential equations for the future rotor magnetic flux space vector and (the magnitude of) the future stator magnetic flux space vector), the space vector predictor 340 provides a practical implementation which facilitates higher speeds of execution due to a lower computational burden.

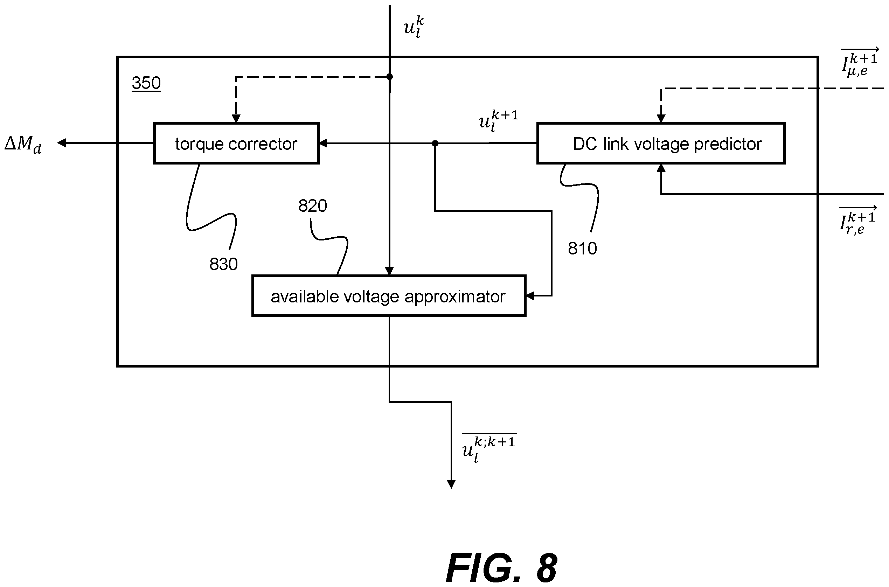

Returning once again to FIG. 5, the estimated future magnetizing electric current space vector $\vec{{I}_{μ , e}^{k + 1}}$, the estimated future rotor electric current space vector $\vec{{I}_{r , e}^{k + 1}}$ and the monitored voltage of the DC link 210 ${u}_{l}^{k}$ are provided as inputs to an energy analyzer 350. In turn, based on the estimated future magnetizing electric current space vector $\vec{{I}_{μ , e}^{k + 1}}$, the estimated future rotor electric current space vector $\vec{{I}_{r , e}^{k + 1}}$ and the monitored voltage of the DC link 210 ${u}_{l}^{k}$, the energy analyzer 350 determines an approximated available voltage of the DC link 210 $\overline{{u}_{l}^{k ; k + 1}}$ and the torque demand correction Δ*M_{d}.* **FIG. 8** is a block diagram which shows the energy analyzer 350 shown by FIG. 5 in more detail.

The energy analyzer 350 includes a DC link voltage predictor 810, an available voltage approximator 820 and a torque corrector 830. The function of each of these aspects of the energy analyzer is described in further detail below.

In use, each change in the torque demand *M_{d}* results in a change in the stored electrical energy of the motor 230 (e.g., the energy stored in the leakage flux / the leakage inductance). Similarly, any change in the magnitude of the flux(es) corresponds to a change in the energy stored in the relevant inductance(s) of the motor 230 (see FIG. 4). It may be assumed that the modification of the energy of the machine (e.g., energy change) directly relates to the modification of the energy of the DC link 210, because the total energy of the DC link 210, the inverter 220 and the motor 230 may be considered to remain substantially unchanged. This total energy *W_{sys}* and total energy change Δ*W_{sys}* is given by Equation (15) below, in which *C_{d}* denotes a capacitance of the DC link 210 (e.g., a capacitance of the capacitor 211) and *uₗ* denotes the monitored voltage of the DC link 210. $\begin{matrix}{W}_{sys} = \frac{1}{2} {C}_{d} {{u}_{l}}^{2} + {L}_{σ} {\left|\vec{{I}_{r}}\right|}^{2} + {L}_{μ} {\left|\vec{{I}_{μ}}\right|}^{2} \\ \to {W}_{sys} = \frac{1}{2} {C}_{d} \left({u}_{l}^{k + {1}^{2}}-{u}_{l}^{{k}^{2}}\right) + {L}_{σ} \left({\left|\vec{{I}_{r}^{k + 1}}\right|}^{2}-{\left|\vec{{I}_{r}^{k}}\right|}^{2}\right) + {L}_{μ} \left({\left|\vec{{I}_{μ}^{k + 1}}\right|}^{2}-{\left|\vec{{I}_{μ}^{k}}\right|}^{2}\right)\end{matrix}$

Often, the magnitude of the magnetizing electric current space vector |*̅I̅_̅{̅µ̅}̅*̅| will be nearly constant between control cycles, so that the ${L}_{μ} {\left|\vec{{I}_{μ}}\right|}^{2} / {L}_{μ} \left({\left|\vec{{I}_{μ}^{k + 1}}\right|}^{2}-{\left|\vec{{I}_{μ}^{k}}\right|}^{2}\right)$ term in Equation (15) above may be neglected (for the purposes of the method 300 herein) to give a simplified total energy *W_{sys,si}* total energy change Δ*W_{sys,si}* per Equation (16) below. $\begin{matrix}{W}_{sys , si} = \frac{1}{2} {C}_{d} {u}_{l}^{2} + {L}_{σ} {\left|\vec{{I}_{r}}\right|}^{2} \\ \to Δ {W}_{sys , si} = \frac{1}{2} {C}_{d} \left({u}_{l}^{k + {1}^{2}}-{u}_{l}^{{k}^{2}}\right) + {L}_{σ} \left({\left|\vec{{I}_{r}^{k + 1}}\right|}^{2}-{\left|\vec{{I}_{r}^{k}}\right|}^{2}\right)\end{matrix}$

Both the total energy change Δ*W_{sys}* given by Equation (15) and the simplified total energy change Δ*W_{sys,si}* given by Equation (16) represent combinations of the change in stored electrical energy of the DC link 210 and the change in stored electrical energy of the motor 230. In the method 300, either of these quantities may be chosen and used as a control quantity for the purpose of voltage stabilization on the DC link 210. To this end, a suitable reference value (e.g., a target value) is given for the chosen control quantity (e.g., Δ*W_{sys}* or Δ*W_{sys,si}*). The DC link voltage predictor 810 then predicts the future voltage of the DC link 210 ${u}_{l}^{k + 1}$ using either Equation (15) or (16) and either Δ*W_{sys}* or Δ*W_{sys,si}* as applicable.

The available voltage approximator 820 then determines the available voltage of the DC link 210 $\overline{{u}_{l}^{k ; k + 1}}$ based on the monitored voltage of the DC link 210 ${u}_{l}^{k}$ (i.e., the present voltage of the DC link ${u}_{l}^{k}$) and the future voltage of the DC link 210 ${u}_{l}^{k + 1}$ per Equation (17) below. This corresponds to a mean DC link voltage available between the current control cycle (i.e., at *k*) and the next control cycle (i.e., at *k +* 1). $\overline{{u}_{l}^{k ; k + 1}} = \frac{{u}_{l}^{k} + {u}_{l}^{k + 1}}{2}$

Accordingly, the available voltage of the DC link 210 $\overline{{u}_{l}^{k ; k + 1}}$ based is determined (e.g., predicted) based on the combination of the change in stored electrical energy of the DC link 210 and the change in stored electrical energy of the motor 230 as given by Equation (15) or (16). The available voltage of the DC link 210 $\overline{{u}_{l}^{k ; k + 1}}$ is then provided to the switching state calculator 320 (and to the inverter model 330) as an input as described above with reference to FIG. 5. In this way, variation of the voltage of DC link 210 between control cycles is considered by the switching state calculator 320 when determining the switching states *̅S̅ᵣ̅*̅ and the switching timings *̅t̅ᵣ̅*̅ for the inverter 220 (which will only have their full effect after the current control cycle has ended).

Based on the future voltage of the DC link 210 ${u}_{l}^{k + 1}$ (and, optionally, the present voltage of the DC link ${u}_{l}^{k}$), the torque corrector 830 determines the torque demand correction Δ*M_{d}* for the purpose of stabilizing the voltage of the DC link 210. As an example, if the future voltage of the DC link 210 ${u}_{l}^{k + 1}$ is lower than a DC link voltage threshold, the torque corrector 830 may determine the torque demand correction Δ*M_{d}* as being equal to a product of a difference between the DC link voltage threshold and the future voltage of the DC link 210 ${u}_{l}^{k + 1}$ and an absolute voltage deviation multiplier. As another (additional or alternative) example, if the change in the voltage of the DC link 210 between control cycles (i.e., the difference between the present voltage of the DC link ${u}_{l}^{k}$ and the future voltage of the DC link 210 ${u}_{l}^{k + 1}$) is greater than a DC link voltage change threshold, the torque corrector 830 may determine the torque demand correction Δ*M_{d}* as being equal to a product of a difference between the DC link voltage change threshold and the change in the voltage of the DC link 210 and a voltage change deviation multiplier.

In this manner, an expected drop in the voltage of the DC link 210 while the torque demand *M_{d}* is increasing (or has increased) can be compensated for using the torque demand correction Δ*M_{d}* to mitigate voltage changes on the DC link 210 (e.g., to stabilize the voltage of the DC link 210). This enables the method 300 to be executed quickly and handle rapid changes in conditions without destabilizing the voltage of the DC link 210. This also facilitates the use of a so-called "lean" DC link 210 topology (e.g., facilitates the size of the capacitor 211 within the DC link 210 being relatively reduced) without adversely affecting the usability of the electrical apparatus 200 as the method 300 is carried out.

The energy analyzer 350 may estimate the energy available for modification of the magnitude of the stator flux (e.g., the stator magnetic flux space vector |Ψ̅*̅ₛ̅*̅|), which is directly related to the energy in the magnetizing inductance *L_{µ}*. Using simplified equation (16) as a basis, the change of energy of the simplified system during the next control cycle, *W*_{sys,si,k+1} - *W*_{sys,si,k}, and the available energy *W*_{sys,si,k+1} at the end of the control cycle may be estimated. These quantities may be linked to a variation of the energy Δ*W_{µ}* of the meagnetizing inductance *L_{µ}*. per equation (18) below, parameters (e.g., coefficients) *c*₁; *c*₂ with 0 ≤ *c*₁; *c*₂ ≤ 1 allow adjustment of the amount of energy made available from the two potential sources. $Δ {W}_{μ} = {c}_{1} ⋅ \left({W}_{sys , si , k + 1}-{W}_{sys , si , k}\right) + {c}_{2} ⋅ {W}_{sys , si , k + 1}$

Magnetizing and demagnetizing (or field weakening) both can be controlled based on equation (18). This type of control avoids, that *L_{µ}*Ψ-!µ is magnetized or demagnetized in a way which violates the DC-link voltage constraints or such, that an uncontrollable interaction between energy modification resulting from torque and energy modification based on magnetizing flux modification occurs.

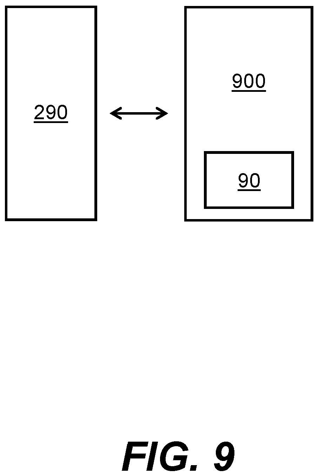

**FIG. 9** shows, highly schematically, a non-transitory computer-readable (e.g., machine-readable) medium 900 having stored thereon a computer program 90 comprising instructions which, when executed by the controller 290 provided to an electrical apparatus in accordance with the example electrical apparatus 200 as described above with reference to FIG. 3, cause the controller 290 to execute (e.g., carry out) the method 300 described above with reference to FIGs. 5 to 8. The computer program 90 may be software or firmware or be a combination of software and firmware.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. Moreover, while the present disclosure is made with in the context of transport refrigeration systems and/or vapor-compression circuits, it will be appreciated that the present disclosure has other possible applications in other technical areas.

Although it has been described that the rotary electric machine 230 is an induction/asynchronous machine 230, this need not necessarily be the case. By way of example, it may be that the rotary electric machine 230 is a synchronous machine (e.g., a permanent magnet synchronous machine). If so, the rotor 234 includes permanent magnets configured to appropriately interact with the stator phase windings 221-223.

Further, although the rotary electric machine 230 has been described as a motor herein, it will be appreciated that the rotary electric machine 230 may be operable as a generator. In addition, it will be appreciated that the principles of the method 300 described herein are also applicable and usable if and when the rotary electric machine 230 is operated as a generator. If so, the voltage of the DC link 210 may become a key control factor in the method 300. For example, the voltage of the DC link 210 may be used to determine the torque demand setpoint *M_{d,sp}* (which will be negative for generator operation). For the avoidance of doubt, although in the specific context of FIGs. 1 and 2 a rotary electric machine may ordinarily be operated as a motor for driving the compressor 402, it will be appreciated that a vehicle or a TRU may comprise an electrical apparatus in which a rotary electric machine thereof is operable, and operated as, a generator.

The controller(s) described herein may comprise a processor. The controller and/or the processor may comprise any suitable circuity to cause performance of the methods described herein and as illustrated in the drawings. The controller or processor may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU), to perform the methods and or stated functions for which the controller or processor is configured.

The scope of protection is defined by the appended claims, to which reference should now be made. However, the disclosure extends to and includes the following alternative statements of invention.
Statement A1. A method of operating an electrical apparatus comprising a rotary electric machine and a power converter electrically coupled to the rotary electric machine, the rotary electric machine including a rotor and a stator, the method comprising:
   determining components of a future stator magnetic flux space vector based on:
      a future rotor magnetic flux space vector,
      a magnitude of the future stator magnetic flux space vector, and
      a torque demand; and
   controlling the power converter based on the determined components of the future stator magnetic flux space vector.
Statement A2. The method of statement A1, wherein determining the components of the future stator magnetic flux space vector is based on an inductance (e.g., a leakage inductance) of the rotary electric machine.
Statement A3. The method of statement A1 or statement A2, wherein determining the components of the future stator magnetic flux space vector is not directly based on a speed of the rotor.
Statement A4. The method of any one of statements A1 to A3, comprising:
   determining a break-down torque of the rotary electric machine; and
   limiting the torque demand based on the break-down torque.
Statement A5. The method of any one of statements A1 to A4, comprising limiting the torque demand based on the future rotor magnetic flux space vector and the magnitude of the future stator magnetic flux space vector.
Statement A6. The method of any one of statements A1 to A5, comprising limiting the torque demand based on a magnitude of a stator electric current space vector.
Statement B1. A method of operating an electrical apparatus comprising a rotary electric machine and a power converter electrically coupled to the rotary electric machine, the rotary electric machine including a rotor and a stator, the method comprising:
   estimating a future rotor electric current space vector and/or a future magnetizing electric current space vector by solving a system of differential equations; and
   controlling the power converter based on the estimated future rotor electric current space vector and/or the estimated future magnetizing electric current space vector.
Statement B2. The method of statement B1, wherein the system of differential equations includes a present stator voltage space vector.
Statement B3. The method of statement B1 or B2, wherein the system of differential equations includes a present rotor electric current space vector.
Statement B4. The method of any of statements B1 to B3, wherein the system of differential equations includes a present magnetizing electric current space vector.
Statement B5. The method of any of statements B1 to B4, wherein the system of differential equations includes at least one stator resistance term.
Statement B6. The method of any of statements B1 to B5, wherein the system of differential equations includes at least one rotor resistance term.
Statement B7. The method of any of statements B1 to B6, wherein the system of differential equations includes at least one magnetizing inductance term.
Statement B8. The method of any of statements B1 to B7, wherein the system of differential equations includes at least one inductance term (e.g., at least one leakage inductance term).
Statement B9. The method of any of statements B1 to B8, wherein the system of differential equations includes at least one rotor speed term.
Statement B10. The method of any of statements B1 to B9, comprising:
   determining the estimated future rotor electric current space vector and/or the estimated future magnetizing electric current space vector based on a present stator electric current space vector and a feedback factor.
Statement B11. The method of each of statements B3, B4 and B10, wherein determining the estimated future rotor electric current space vector and/or the estimated future magnetizing electric current space vector based on the present stator electric current space vector and the feedback factor includes:
   determining the present rotor electric current space vector and the present magnetizing electric current space vector based on the present stator electric current space vector and the feedback factor.
Statement B12. The method of statement B10 or B11, wherein the feedback factor includes an inductance term, optionally wherein the feedback factor includes a leakage inductance term and a magnetizing inductance term.
Statement B13. The method of any one of statements B10 to B12, wherein the feedback factor includes a leakage inductance term and a magnetizing inductance term, and wherein the feedback factor corresponds to a quotient of the leakage inductance term by a sum of the magnetizing inductance term and the leakage inductance term.
Statement C1. A method of operating an electrical apparatus comprising a DC link, a rotary electric machine and a power converter electrically coupled to the rotary electric machine and the DC link, the rotary electric machine including a rotor and a stator, the method comprising:
   controlling the power converter based on a combination of a change in a stored electrical energy of the DC link and a change in a stored electrical energy of the rotary electrical machine.
Statement C2. The method of statement C1, comprising:
   determining the change in the stored electrical energy of the DC link based on a capacitance of the DC link and a voltage of the DC link.
Statement C3. The method of statement C1, method comprising:
   monitoring a voltage of the DC link; and
   determining the change in the stored electrical energy of the DC link based on a capacitance of the DC link and the monitored voltage of the DC link.
Statement C4. The method of any of statements C1 to C3, comprising:
   determining the change in the stored electrical energy of the rotary electrical machine based on a rotor electric current space vector.
Statement C5. The method of statement C4, comprising:
   determining the change in the stored electrical energy of the rotary electrical machine based on the rotor electric current space vector and an inductance (e.g., a leakage inductance) of the rotary electrical machine.
Statement C6. The method of any of statements C1 to C5, comprising:
   determining the change in the stored electrical energy of the rotary electrical machine based on a magnetizing electric current space vector.
Statement C7. The method of statement C6, comprising:
   determining the change in the stored electrical energy of the rotary electrical machine based on the magnetizing electric current space vector and a magnetizing inductance.
Statement C8. The method of any of statements C1 to C7, comprising:
   controlling the power converter to target maintaining the combination of the change in the stored electrical energy of the DC link and the change in the stored electrical energy of the rotary electrical machine at a reference value.
Statement D1. A method of operating an electrical apparatus comprising a rotary electric machine and a power converter electrically coupled to the rotary electric machine, the rotary electric machine including a rotor and a stator, the method comprising:
   determining components of a future stator magnetic flux space vector based on:
      a future rotor magnetic flux space vector,
      a magnitude of the future stator magnetic flux space vector, and
      a torque demand; and
   estimating a future rotor electric current space vector and a future magnetizing electric current space vector by solving a system of differential equations; and
   controlling the power converter based on:
      the estimated future rotor electric current space vector and/or the estimated future magnetizing electric current space vector, and
      the determined components of the future stator magnetic flux space vector.
Statement D2. The method of statement D1, wherein determining the components of the future stator magnetic flux space vector is based on an inductance (e.g., a leakage inductance) of the rotary electric machine.
Statement D3. The method of statement D1 or statement D2, wherein determining the components of the future stator magnetic flux space vector is not directly based on a speed of the rotor.
Statement D4. The method of any one of statements D1 to D3, comprising:
   determining a break-down torque of the rotary electric machine; and
   limiting the torque demand based on the break-down torque.
Statement D5. The method of any one of statements D1 to D4, comprising limiting the torque demand based on the future rotor magnetic flux space vector and the magnitude of the future stator magnetic flux space vector.
Statement D6. The method of any one of statements D1 to D5, comprising limiting the torque demand based on a magnitude of a stator electric current space vector.
Statement D7. The method of any one of statements D1 to D6, wherein the system of differential equations includes a present stator voltage space vector.
Statement D8. The method of any one of statements D1 to D7, wherein the system of differential equations includes a present rotor electric current space vector.
Statement D9. The method of any one of statements D1 to D8, wherein the system of differential equations includes a present magnetizing electric current space vector.
Statement D10. The method of any one of statements D1 to D9, wherein the system of differential equations includes at least one stator resistance term.
Statement D11. The method of any one of statements D1 to D10, wherein the system of differential equations includes at least one rotor resistance term.
Statement D12. The method of any one of statements D1 to D11, wherein the system of differential equations includes at least one magnetizing inductance term.
Statement D13. The method of any one of statements D1 to D12, wherein the system of differential equations includes at least one inductance term (e.g., at least one inductance term).
Statement D14. The method of any one of statements D1 to D13, wherein the system of differential equations includes at least one rotor speed term.
Statement D15. The method of any one of statements D1 to D14, comprising:
   determining the estimated future rotor electric current space vector and/or the estimated future magnetizing electric current space vector based on a present stator electric current space vector and a feedback factor.
Statement D16. The method of each of statements D8, D9 and D15, wherein determining the estimated future rotor electric current space vector and/or the estimated future magnetizing electric current space vector based on the present stator electric current space vector and the feedback factor includes:
   determining the present rotor electric current space vector and the present magnetizing electric current space vector based on the present stator electric current space vector and the feedback factor.
Statement D17. The method of statement D15 or D16, wherein the feedback factor includes an inductance term, and optionally wherein the feedback factor includes a leakage inductance term and a magnetizing inductance term.
Statement D18. The method of any one of statements D15 to D17, wherein the feedback factor includes a leakage inductance term and a magnetizing inductance term, and wherein the feedback factor corresponds to a quotient of the leakage inductance term by a sum of the magnetizing inductance term and the leakage inductance term.
Statement E1. A method of operating an electrical apparatus comprising a DC link; a rotary electric machine and a power converter electrically coupled to the rotary electric machine and the DC link, the rotary electric machine including a rotor and a stator, the method comprising:
   determining components of a future stator magnetic flux space vector based on:
      a future rotor magnetic flux space vector,
      a magnitude of the future stator magnetic flux space vector, and
      a torque demand; and
   controlling the power converter based on:
      the determined components of the future stator magnetic flux space vector, and
      a combination of a change in a stored electrical energy of the DC link and a change in a stored electrical energy of the rotary electrical machine.
Statement E2. The method of statement E1, wherein determining the components of the future stator magnetic flux space vector is based on an inductance (e.g., a leakage inductance) of the rotary electric machine.
Statement E3. The method of statement E1 or statement E2, wherein determining the components of the future stator magnetic flux space vector is not directly based on a speed of the rotor.
Statement E4. The method of any one of statements E1 to E3, comprising:
   determining a break-down torque of the rotary electric machine; and
   limiting the torque demand based on the break-down torque.
Statement E5. The method of any one of statements E1 to E4, comprising limiting the torque demand based on the future rotor magnetic flux space vector and the magnitude of the future stator magnetic flux space vector.
Statement E6. The method of any one of statements E1 to E5, comprising limiting the torque demand based on a magnitude of a stator electric current space vector.
Statement E7. The method of any one of statements E1 to E5, comprising:
   determining the change in the stored electrical energy of the DC link based on a capacitance of the DC link and a voltage of the DC link.
Statement E8. The method of any one of statements E1 to E5, method comprising:
   monitoring a voltage of the DC link; and
   determining the change in the stored electrical energy of the DC link based on a capacitance of the DC link and the monitored voltage of the DC link.
Statement E9. The method of any one of statements E1 to E8, comprising:
   determining the change in the stored electrical energy of the rotary electrical machine based on a rotor electric current space vector.
Statement E10. The method of statement E9, comprising:
   determining the change in the stored electrical energy of the rotary electrical machine based on the rotor electric current space vector and an inductance (e.g., a leakage inductance) of the rotary electrical machine.
Statement E11. The method of any of statements E1 to E10, comprising:
   determining the change in the stored electrical energy of the rotary electrical machine based on a magnetizing electric current space vector.
Statement E12. The method of statement E11, comprising:
   determining the change in the stored electrical energy of the rotary electrical machine based on the magnetizing electric current space vector and a magnetizing inductance.
Statement E13. The method of any of statements E1 to E12, comprising:
   controlling the power converter to target maintaining the combination of the change in the stored electrical energy of the DC link and the change in the stored electrical energy of the rotary electrical machine at a reference value.
Statement F1. A method of operating an electrical apparatus comprising a DC link, a rotary electric machine and a power converter electrically coupled to the rotary electric machine and the DC link, the rotary electric machine including a rotor and a stator, the method comprising:
   estimating a future rotor electric current space vector and/or a future magnetizing electric current space vector by solving a system of differential equations; and
   controlling the power converter based on:
      the estimated future rotor electric current space vector and/or the estimated future magnetizing electric current space vector,
      a combination of a change in a stored electrical energy of the DC link and a change in a stored electrical energy of the rotary electrical machine.
Statement F2. The method of statement F1, wherein the system of differential equations includes a present stator voltage space vector.
Statement F3. The method of statement F1 or F2, wherein the system of differential equations includes a present rotor electric current space vector.
Statement F4. The method of any of statements F1 to F3, wherein the system of differential equations includes a present magnetizing electric current space vector.
Statement F5. The method of any of statements F1 to F4, wherein the system of differential equations includes at least one stator resistance term.
Statement F6. The method of any of statements F1 to F5, wherein the system of differential equations includes at least one rotor resistance term.
Statement F7. The method of any of statements F1 to F6, wherein the system of differential equations includes at least one magnetizing inductance term.
Statement F8. The method of any of statements F1 to F7, wherein the system of differential equations includes at least one inductance term (e.g., at least one leakage inductance term).
Statement F9. The method of any of statements F1 to F8, wherein the system of differential equations includes at least one rotor speed term.
Statement F10. The method of any of statements F1 to F9, comprising:
   determining the estimated future rotor electric current space vector and/or the estimated future magnetizing electric current space vector based on a present stator electric current space vector and a feedback factor.
Statement F11. The method of each of statements F3, F4 and F10, wherein determining the estimated future rotor electric current space vector and/or the estimated future magnetizing electric current space vector based on the present stator electric current space vector and the feedback factor includes:
   determining the present rotor electric current space vector and the present magnetizing electric current space vector based on the present stator electric current space vector and the feedback factor.
Statement F12. The method of statement F10 or F11, wherein the feedback factor includes an inductance term, optionally wherein the feedback factor includes a leakage inductance term and a magnetizing inductance term.
Statement F13. The method of any one of statements F10 to F12, wherein the feedback factor includes a leakage inductance term and a magnetizing inductance term, and wherein the feedback factor corresponds to a quotient of the leakage inductance term by a sum of the magnetizing inductance term and the leakage inductance term.
Statement F14. The method of any of statements F1 to F13, comprising:
   determining the change in the stored electrical energy of the DC link based on a capacitance of the DC link and a voltage of the DC link.
Statement F15. The method of any of statements F1 to F14, method comprising:
   monitoring a voltage of the DC link; and
   determining the change in the stored electrical energy of the DC link based on a capacitance of the DC link and the monitored voltage of the DC link.
Statement F16. The method of any of statements F1 to F15, comprising:
   determining the change in the stored electrical energy of the rotary electrical machine based on a rotor electric current space vector.
Statement F17. The method of statement F16, comprising:
   determining the change in the stored electrical energy of the rotary electrical machine based on the rotor electric current space vector and an inductance (e.g., a leakage inductance) of the rotary electrical machine.
Statement F18. The method of any of statements F1 to F17, comprising:
   determining the change in the stored electrical energy of the rotary electrical machine based on a magnetizing electric current space vector.
Statement F19. The method of statement F18, comprising:
   determining the change in the stored electrical energy of the rotary electrical machine based on the magnetizing electric current space vector and a magnetizing inductance.
Statement F20. The method of any of statements F1 to F19, comprising:
   controlling the power converter to target maintaining the combination of the change in the stored electrical energy of the DC link and the change in the stored electrical energy of the rotary electrical machine at a reference value.
Statement G1. A method of operating an electrical apparatus comprising a DC link, a rotary electric machine and a power converter electrically coupled to the rotary electric machine and the DC link, the rotary electric machine including a rotor and a stator, the method comprising:
   determining components of a future stator magnetic flux space vector based on:
      a future rotor magnetic flux space vector,
      a magnitude of the future stator magnetic flux space vector, and
      a torque demand; and
   estimating a future rotor electric current space vector and/or a future magnetizing electric current space vector by solving a system of differential equations; and
   controlling the power converter based on:
      the estimated future rotor electric current space vector and/or the estimated future magnetizing electric current space vector,
      the determined components of the future stator magnetic flux space vector, and
      a combination of a change in a stored electrical energy of the DC link and a change in a stored electrical energy of the rotary electrical machine.
Statement G2. The method of statement G1, wherein determining the components of the future stator magnetic flux space vector is based on an inductance (e.g., a leakage inductance) of the rotary electric machine.
Statement G3. The method of statement G1 or statement G2, wherein determining the components of the future stator magnetic flux space vector is not directly based on a speed of the rotor.
Statement G4. The method of any one of statements G1 to G3, comprising:
   determining a break-down torque of the rotary electric machine; and
   limiting the torque demand based on the break-down torque.
Statement G5. The method of any one of statements G1 to G4, comprising limiting the torque demand based on the future rotor magnetic flux space vector and the magnitude of the future stator magnetic flux space vector.
Statement G6. The method of any one of statements G1 to G5, comprising limiting the torque demand based on a magnitude of a stator electric current space vector.
Statement G7. The method of any one of statements G1 to G6, wherein the system of differential equations includes a present stator voltage space vector.
Statement G8. The method of any one of statements G1 to G7, wherein the system of differential equations includes a present rotor electric current space vector.
Statement G9. The method of any one of statements G1 to G8, wherein the system of differential equations includes a present magnetizing electric current space vector.
Statement G10. The method of any one of statements G1 to G9, wherein the system of differential equations includes at least one stator resistance term.
Statement G11. The method of any one of statements G1 to G10, wherein the system of differential equations includes at least one rotor resistance term.
Statement G12. The method of any one of statements G1 to G11, wherein the system of differential equations includes at least one magnetizing inductance term.
Statement G13. The method of any one of statements G1 to G12, wherein the system of differential equations includes at least one inductance term (e.g., at least one leakage inductance term).
Statement G14. The method of any one of statements G1 to G13, wherein the system of differential equations includes at least one rotor speed term.
Statement G15. The method of any one of statements G1 to G14, comprising:
   determining the estimated future rotor electric current space vector and/or the estimated future magnetizing electric current space vector based on a present stator electric current space vector and a feedback factor.
Statement G16. The method of each of statements G8, G9 and G15, wherein determining the estimated future rotor electric current space vector and/or the estimated future magnetizing electric current space vector based on the present stator electric current space vector and the feedback factor includes:
   determining the present rotor electric current space vector and the present magnetizing electric current space vector based on the present stator electric current space vector and the feedback factor.
Statement G17. The method of statement G15 or G16, wherein the feedback factor includes an inductance term, optionally wherein the feedback factor includes a leakage inductance term and a magnetizing inductance term.
Statement G18. The method of any one of statements G15 to G17, wherein the feedback factor includes a leakage inductance term and a magnetizing inductance term, and wherein the feedback factor corresponds to a quotient of the leakage inductance term by a sum of the magnetizing inductance term and the leakage inductance term.
Statement G19. The method of any one of statements G1 to G18, comprising:
   determining the change in the stored electrical energy of the DC link based on a capacitance of the DC link and a voltage of the DC link.
Statement G20. The method of any one of statements G1 to G18, method comprising:
   monitoring a voltage of the DC link; and
   determining the change in the stored electrical energy of the DC link based on a capacitance of the DC link and the monitored voltage of the DC link.
Statement G21. The method of any one of statements G1 to G20, comprising:
   determining the change in the stored electrical energy of the rotary electrical machine based on a rotor electric current space vector.
Statement G22. The method of statement G21, comprising:
   determining the change in the stored electrical energy of the rotary electrical machine based on the rotor electric current space vector and an inductance (e.g., a leakage inductance) of the rotary electrical machine.
Statement G23. The method of any of statements G1 to G22, comprising:
   determining the change in the stored electrical energy of the rotary electrical machine based on a magnetizing electric current space vector.
Statement G24. The method of statement G23, comprising:
   determining the change in the stored electrical energy of the rotary electrical machine based on the magnetizing electric current space vector and a magnetizing inductance.
Statement G25. The method of any of statements G1 to G24, comprising:
   controlling the power converter to target maintaining the combination of the change in the stored electrical energy of the DC link and the change in the stored electrical energy of the rotary electrical machine at a reference value.
Statement H1. An electrical apparatus comprising: a rotary electric machine including a rotor and a stator; a power converter electrically coupled to the rotary electric machine; and a controller configured to carry out the method of any of statements A1 to A6, B1 to B13, C1 to C8, D1 to D18, E1 to E13, F1 to F20 and/or G1 to G25.
Statement J1. A computer program comprising instructions which, when executed by the controller of the electrical apparatus of statement H1, cause the controller to carry out the method of any of statements A1 to A6, B1 to B13, C1 to C8, D1 to D18, E1 to E13, F1 to F20 and/or G1 to G25.
Statement K1. A machine-readable medium having stored thereon the computer program of statement J1.
Statement L1. A transport refrigeration system comprising the electrical apparatus of statement H1.
Statement M1. A vehicle comprising the electrical apparatus of statement H1.

## Claims

1. A method of operating an electrical apparatus comprising a rotary electric machine and a power converter electrically coupled to the rotary electric machine, the rotary electric machine including a rotor and a stator, the method comprising:
determining components of a future stator magnetic flux space vector based on:
a future rotor magnetic flux space vector,
a magnitude of the future stator magnetic flux space vector, and
a torque demand; and
controlling the power converter based on the determined components of the future stator magnetic flux space vector.

2. The method of claim 1, wherein determining the components of the future stator magnetic flux space vector is based on an inductance of the rotary electric machine.

3. The method of claim 1 or claim 2, wherein determining the components of the future stator magnetic flux space vector is not directly based on a speed of the rotor.

4. The method of any of claims 1 to 3, comprising:
determining a break-down torque of the rotary electric machine; and
limiting the torque demand based on the break-down torque.

5. The method of any of claims 1 to 4, comprising:
limiting the torque demand based on:
the future rotor magnetic flux space vector; and
the magnitude of the future stator magnetic flux space vector.

6. A method of operating an electrical apparatus comprising a rotary electric machine and a power converter electrically coupled to the rotary electric machine, the rotary electric machine including a rotor and a stator, the method comprising:
estimating a future magnetizing electric current space vector by solving a system of differential equations; and
controlling the power converter based on the estimated future magnetizing electric current space vector.

7. The method of claim 6, wherein the system of differential equations includes:
a present stator voltage space vector;
a present rotor electric current space vector;
a present magnetizing electric current space vector;
at least one stator resistance term;
at least one rotor resistance term;
at least one magnetizing inductance term;
at least one inductance term; and/or
at least one rotor speed term.

8. The method of claim 6 or claim 7, comprising:
determining the estimated future magnetizing electric current space vector based on a present stator electric current space vector and a feedback factor.

9. The method of claim 8, wherein the feedback factor includes an inductance term.

10. The method of claim 8, wherein the feedback factor corresponds to a quotient of a leakage inductance term by a sum of a magnetizing inductance term and the leakage inductance term.

11. A method of operating an electrical apparatus comprising a DC link, a rotary electric machine and a power converter electrically coupled to the rotary electric machine and the DC link, the rotary electric machine including a rotor and a stator, the method comprising:
controlling the power converter based on a combination of a change in a stored electrical energy of the DC link and a change in a stored electrical energy of the rotary electric machine.

12. The method of claim 11, comprising:
determining the change in the stored electrical energy of the DC link based on a capacitance of the DC link and a voltage of the DC link.

13. The method claim 11 or claim 12, comprising:
determining the change in the stored electrical energy of the rotary electric machine based on a rotor electric current space vector and an inductance of the rotary electric machine.

14. The method of any of claims 11 to 13, comprising:
determining the change in the stored electrical energy of the rotary electric machine based on a magnetizing electric current space vector and a magnetizing inductance of the rotary electric machine.

15. The method of any of claims 11 to 14, comprising:
controlling the power converter to target maintaining the combination of the change in the stored electrical energy of the DC link and the change in the stored electrical energy of the rotary electric machine at a reference value.
